# EUROPÄISCHE PATENTSCHRIFT

(11) **EP 0 625 525 B1**
(45) Veröffentlichungstag und Bekanntmachung des Hinweises auf die Patenterteilung: **15.10.1997**
(21) Anmeldenummer: 94107758.8
(22) Anmeldetag: 19.05.1994
(51) Int. Cl.: C08F 10/00, C08F 4/76, C08F 4/02

(54) **Hochaktive Katalysatoren für die Olefinpolymerisation und Polymerisationsverfahren unter Verwendung dieser Katalysatoren**
High active catalyst for olefin polymerisation and polymerisation process using them
Catalyseurs hautement actifs pour la polymérisation d'oléfines et procédé de polymérisation les utilisant

(30) Priorität: 21.05.1993 AT 993/93
(43) Veröffentlichungstag der Anmeldung: 23.11.1994
(73) Patentinhaber: PCD-Polymere Gesellschaft m.b.H., A-2323 Schwechat-Mannswörth (AT)
(72) Erfinder: Hafner, Norbert, Dipl.-Ing. Dr., A-4020 Linz (AT); Töltsch, Wilfried, A-4614 Marchtrenk (AT); Ledwinka, Hans, Dr., A-4400 St. Ulrich (AT); Neissl, Wolfgang, Dipl.-Ing., A-4040 Lichtenberg (AT)
(74) Vertreter: Kunz, Ekkehard, Dr.

(56) Entgegenhaltungen:
- FR-A- 2 124 419
- FR-A- 2 264 042
- US-A- 3 932 307
- US-A- 3 950 269
- US-A- 3 971 767

## Beschreibung

Die Erfindung betrifft ein Verfahren zur Herstellung von hochaktiven Katalysatoren für die Olefinpolymerisation sowie ein Polymerisationsverfahren unter Verwendung dieser Katalysatoren.

In US 3,932,307, US 3,950,269, US 4,228,263 und US 4,335,225 werden Katalysatoren für die Homo- und Copolymerisation von Olefinen, wie z. B. Ethylen, Propylen, Buten-1 und höheren 1-Olefinen beschrieben, die durch Reaktion von metallorganischen Ti-, Zr- oder Hf-Verbindungen mit teilweise hydroxylierten Oberflächen von Metalloxiden, beispielsweise von Al₂O₃, TiO₂, SiO₂, MgO erhalten werden. Die mit diesen Katalysatoren erhaltenen Polyolefine zeichnen sich durch verbesserte Eigenschaften aus, insbesondere können vor allem aufgrund einer stereoregulären Blockanordnung im Kettenaufbau Polyolefine mit elastomeren Eigenschaften erhalten werden. Beispielsweise bestehen elastomere Polypropylene, wie sie z. B. in der US 4,335,225 beschrieben sind, im wesentlichen aus Blöcken von isotaktischen und ataktischen Propylensequenzen, die abwechselnd in der Polymerkette angeordnet sind, wobei auch zusätzliche Comonomere in die Polymerkette eingebaut sein können. Elastomere Polyolefine zeichnen sich vor allem durch hohe Elastizität und gute Zähigkeitsund Schlagzähigkeitseigenschaften aus. Die Herstellung der elastomeren Polyolefine erfolgt nach konventionellen Verfahren durch Polymerisation der Olefine gegebenenfalls gemeinsam mit weiteren Comonomeren in organischen Reaktionsmedien, wie z. B. Hexan, Cyclohexan oder im flüssigen oder gasförmigen Monomer.
Der Nachteil der bekannten, zur Herstellung von elastomeren Polyolefinen verwendeten Katalysatoren liegt vor allem darin, daß ihre Aktivität nicht sehr hoch ist, so daß relativ hohe Katalysatormengen zur Polymerisation notwendig sind. Die Polymerausbeute der Katalysatoren liegt beispielsweise gemäß US 4,228,263 bei 30.000 bis 1 Million g Polymer pro g-Atom Zr, wobei jedoch die gemäß den Beispielen tatsächlich erzielte Ausbeute mit 575.000 g Polymer/g Atom Zr weit unter diesen Werten liegt. Außer dem hohen Katalysatorverbrauch erweist es sich auch als sehr ungünstig, daß damit auch relativ große Mengen an Katalysatorresten im fertigen Polymer vorliegen, die eine Verunreinigung des Polymers darstellen, womit eine Verschlechterung der Polymereigenschaften, insbesondere der mechanischen und optischen Eigenschaften, verbunden ist. Die Katalysatorreste im Polymer liegen beispielsweise gemäß der bevorzugten Verfahrensweise der US 4,228,263 in Beispiel 3A bei 0,63 Gew % Al₂O₃ und 217 ppm Zr.

Es stellte sich demnach die Aufgabe, diese Nachteile zu beseitigen und insbesondere Katalysatoren mit höherer Aktivität zu finden, mit denen höhere Polymerausbeuten erzielt werden können. Derartige verbesserte Katalysatoren werden erfindungsgemäß dadurch erhalten, daß die bei der Herstellung des Katalysators ebenfalls entstehenden Begleit- oder Nebenprodukte teilweise oder ganz vom Katalysator abgetrennt werden.

Gegenstand der Erfindung ist demnach ein Verfahren zur Herstellung eines hochaktiven, Ti, Zr und/oder Hf enthaltenden Katalysators für die Olefinpolymerisation, bestehend im wesentlichen aus dem Reaktionsprodukt von
a) metallorganischen Verbindungen der Formel (R-CH₂)₄M, in der R ein Aryl-, Aralkyl, tertiärer Alkyl- oder Trialkylsilylrest ist, wobei die RCH₂-Gruppe keinen an ein Atom im beta-Stellung zu M gebundenen H besitzt, und M für Ti, Zr oder Hf steht, mit
b) Metalloxiden aus der Gruppe IIa, IIIa, IVa, IVb mit einer teilweise hydroxylierten Oberfläche oder deren Gemischen
in einem Kohlenwasserstoff als Reaktionsmedium.

Als Reste R sind insbesondere solche zu verstehen, wie sie in US 3,932,307 und US 3,950,269 beschrieben sind, wobei die Alkylreste 1 bis 12 C-Atome enthalten können. Bevorzugt sind Benzyl-, Neopentyl- und Neophylreste. Als Beispiele von metallorganischen Verbindungen sind Tetraneophylzirkonium, Tetraneopentylzirkonium, Tetrabenzyltitan, Tetrabenzylzirkonium, Tetraneopentylhafnium, Tetrabenzylhafnium, Tetrakis(trimethylsilylmethyl)zirkonium, Tetraneophyltitan und Tetraneopentyltitan zu nennen. Als Metalloxid-Komponente (Katalysatorträger) des Katalysators kommen ebenfalls insbesondere solche in Frage, wie sie in US 3,932,307 und US 3,950,269 beschrieben sind. Bevorzugte Metalloxide sind Al₂O₃, TiO₂, SiO₂ oder MgO. Die Hydroxylierung der Metalloxid-Oberflächen erfolgt dabei beispielsweise in einer Wasserdampf-Atmosphäre und durch anschließendes Trocknen bei 300 bis 500°C.

Die beiden Katalysatorkomponenten werden im allgemeinen im Verhältnis von etwa 0,01 bis 1 mMol der metallorganischen Verbindung pro Gramm Metalloxid umgesetzt. Bevorzugt sind Katalysatoren, die durch Umsetzung von Organozirkoniumverbindungen (RCH₂)₄Zr, insbesondere Tetraneophylzirkonium (TNZ), mit hydroxyliertem Al₂O₃ hergestellt werden. Das bevorzugte Verhältnis von TNZ zu Al₂O₃ beträgt etwa 0,1 bis 1 mMol Organozirkoniumverbindung pro Gramm Al₂O₃. Die Herstellung der Katalysatoren in ihrer bekannten Form mit geringer Aktivität wird beispielsweise ebenfalls in der US 3,932,307, US 4,335,225 bzw. in ihrer hydrierten Form in der US 3,950,269 und US 3,971,767 beschrieben.

Beim Verfahren zur Herstellung der Katalysatoren in ihrer hochaktiven Form werden im wesentlichen
a) metallorganische Verbindungen der Formel (RCH₂)₄M, in der R ein Aryl-, Aralkyl, tertiärer Alkyl- oder Trialkylsilylrest, ist, wobei die RCH₂-Gruppe keinen an ein Atom in beta-Stellung zu M gebundenen H besitzt, und M für Ti, Zr oder Hf steht, mit
b) Metalloxiden aus der Gruppe IIa, IIIa, IVa, IVb mit einer teilweise hydroxylierten Oberfläche oder deren Gemischen in einem Kohlenwasserstoff als Reaktionsmedium umgesetzt. Gemäß Erfindung werden die bei der Umsetzung entstehenden Nebenprodukte anschließend durch Auswaschen beispielsweise mit einem flüssigen, inerten Kohlenwasserstoff, z. B. wie er als Reaktionsmedium eingesetzt wird, oder durch mechanische Trennverfahren, wie z. B. durch Filtration, Zentrifugieren oder Dekantieren gemeinsam mit dem Reaktionsmedium, oder durch Abdampfen bevorzugt im Vakuum, oder durch eine Kombination dieser Maßnahmen, ganz oder teilweise aus dem erhaltenen Katalysator entfernt.

Als Reaktionsmedium dienen in der Olefinpolymerisation übliche Kohlenwasserstoffe, wie z. B. Alkane, beispielweise Butan, Pentan, Hexan; Cycloalkane, beispielsweise Cyclohexan; oder Mineralöle.
Es wird angenommen, daß die Umsetzung der metallorganischen Verbindung mit dem partiell hydroxylierten Metalloxid, beispielsweise partiell hydroxyliertem Al₂O₃, bevorzugt gemäß folgender Gleichung erfolgt:

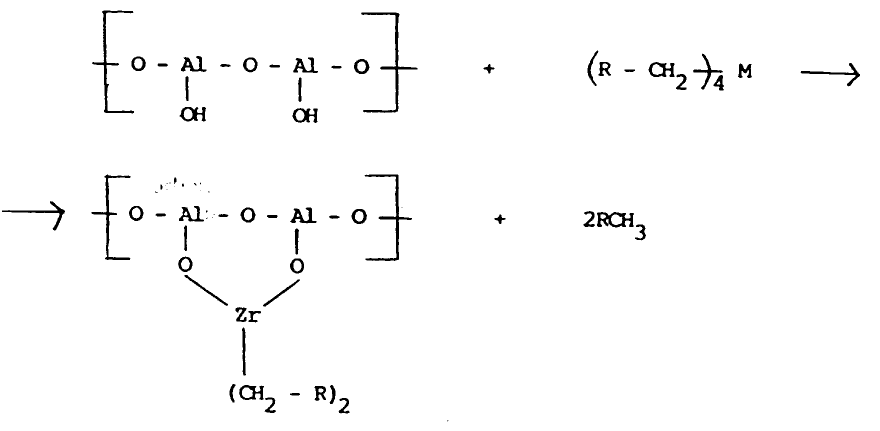

Bei der an die Umsetzung anschließenden erfindungsgemäßen Reinigung wird bevorzugt das gemäß obiger Reaktionsgleichung neben dem Katalysator als Nebenprodukt entstehende RCH₃ abgetrennt. Als weitere Nebenprodukte sind beispielsweise auch Produkte möglich, die bei der Alterung oder Hydrierung des Katalysators entstehen und zumeist in flüssiger oder gelöster Form anfallen, beispielsweise R-CH₂*-Radikale oder die bei einer eventuellen Hydrierung entstehenden Verbindungen wie Ethylcyclohexan, (1-Methylethyl)cyclohexan und (1,1-Dimethylethyl)cyclohexan. Im Vergleich zu den Aktivitäten der bekannten Katalysatoren zeigen sich bereits große Verbesserungen, wenn die Nebenprodukte, beispielsweise im Falle der Verwendung von Tetraneophylzirkonium das tert. Butylbenzol, erfindungsgemäß beispielsweise durch Filtration oder Zentrifugation gemeinsam mit dem als Reaktionsmedium eingesetzten flüssigen Kohlenwasserstoff abgetrennt werden. Es erweist sich weiters als vorteilhaft, die zur Herstellung des Katalysators eingesetzte metallorganische Verbindung (RCH₂)₄M vor der Umsetzung mit dem Metalloxid aus einem flüssigen Kohlenwasserstoff umzukristallisieren und dabei vorzugsweise bei möglichst tiefer Temperatur zu lösen.

Ein weiterer Gegenstand der Erfindung ist ein Verfahren zur Polymerisation von Olefinen unter Verwendung der erfindungsgemäßen Katalysatoren, bei dem besonders hohe Polymerausbeuten bezogen auf die Menge der eingesetzten Katalysatoren erzielt werden. Als Olefine kommen vor allem Ethylen, Propylen, Buten-1, Penten-1, 4-Methylpenten-1, Hexen-1, Hepten-1, Octen-1, Nonen-1, Decen-1, Hexadien-1,4 oder Hexadien-1,5 in Frage, wobei sowohl Homopolymere als auch Copolymere hergestellt werden können. Bevorzugt werden die Katalysatoren zur Homo- oder Copolymerisation von Ethylen, Propylen, Buten-1, Penten-1 und 4-Methylpenten-1, besonders bevorzugt von Propylen, gegebenenfalls mit Ethylen als Comonomer verwendet. Die Polymerausbeuten liegen im Fall des Propylens etwa bei 2,6.10⁶ g pro Mol eingesetztes Übergangsmetall M. Die Katalysatoren können sowohl als Pulver, als auch als Suspension in einem Kohlenwasserstoff, beispielsweise Butan, Pentan, Hexan, Cyclohexan oder Mineralölen, in die Polymerisationsmischung eingebracht werden.

Mit Hilfe der erfindungsgemäßen Katalysatoren ist es möglich, die Molmassen der Polymere durch Zugabe von Wasserstoff bei der Polymerisation in weiten Grenzen zu steuern. Die Katalysatoren können in allen bekannten Polymerisationsverfahren wie z. B. in kontinuierlichen und diskontinuierlichen Lösungs-, Bulk- oder Gasphaseverfahren eingesetzt werden. Sie besitzen eine erhöhte Stabilität auch bei höheren Polymerisationstemperaturen, wodurch sie eine erhöhte Effizienz aufweisen und auch in Verfahren mit längerer Verweilzeit eingesetzt werden können.

### A) Herstellung der Katalysatoren A - I

### Beispiel 1: Katalysator A

44,22 g eines graubraun gefärbten Tetraneophylzirkon (TNZ; Tm= 66°C, Du Pont) wurden unter Reinststickstoffatmosphäre in 620 ml n-Hexan, gereinigt mittels eines Cu-Katalysators (BASF-Katalysator R 3-11 bei 70°C) zur Sauerstoffentfernung und 4-bzw. 10A-Molekularsieb zur Entfernung von Wasser und polaren Verunreinigungen bei 20°C in einem Schutzgaskolben gelöst. Die erhaltene Suspension wurde nach Absetzen des größten Teils des unlöslichen Rückstands nach 15 min über eine Glasfritte in einen auf -40°C gekühlten, gerührten Schutzgasglaskolben (ausgeheizt bei über 150°C und mit Reinststickstoff (unter 2ppm O₂) gespült) filtriert. Der Kolben wurde nach Abschluß der Filtration (Dauer ca. 140 min) noch 15 min unter Rühren bei -40°C gehalten, um das TNZ möglichst quantitativ auszufällen. Nach Absetzen des TNZ wurde die überstehende Lösung mittels einer Filterkerze unter N₂-Überdruck in einen weiteren gekühlten Schutzgaskolben filtriert. Das verbliebene TNZ wurde in weiteren 350 ml n-Hexan bei ca. 5 - 10°C während 15 min gelöst und nach Abkühlen auf -34°C erneut ausgefällt.
Nach Absetzen des TNZ-Niederschlags wurde die Lösung wieder mittelsN2-Überdruck über eine Glasfilterkerze in den gekühlten Schutzgaskolben mit der ersten Mutterlauge filtriert. Anschließend wurde das TNZ durch Anlegen eines Ölpumpenvakuums (unter 1.10⁻² mbar) über zwischengeschaltete mit Flüssigstickstoff gekühlte Kühlfallen getrocknet. Das gereinigte TNZ zeigte einen Schmelzpunkt von 68°C und war weiß bis cremefarben. Die gesammelten Mutterlaugen wurden auf ca. 200 ml eingeengt und das noch gelöste TNZ durch Kühlen auf -40°C ausgefällt. Nach erneuter Druckfiltration über eine Filterkerze wurde das TNZ erneut in 100 ml Hexan gelöst, erneut bei -40°C ausgefällt, abfiltriert und mittels Vakuum wie oben getrocknet. Die Gesamtausbeute dieses Reinigungsprozesses betrug 82,2 %. Alle Operationen wurden unter Reinststickstoff durchgeführt.

In einen 6l-4-Hals-Schutzgaskolben wurden 266,7 g konditioniertes Al₂O₃ (Alumina C von DEGUSSA, konditioniert bei ca. 800 - 1000°C im N2-Strom und nach Lagerung bei einer rel. Luftfeuchte von 50 % und 23°C während 16 h und erneuter Trocknung zur Einstellung einer optimalen Hydroxylkonzentration an der Oberfläche von ca. 1 mmol/g Alumina C bei 400°C im Stickstoffstrom) eingewogen und mit 5035 ml n-Hexan, gereinigt mittels BASF-Katalysator R 3 - 11 und 4- bzw. 10A-Molekularsieb, versetzt. Die Suspension wurde ca. 1 h bei 300U/min gerührt. Dann wurden die oben hergestellten 33,23 g TNZ (ohne Produkt aus aufgearbeiteter Mutterlauge) in 465 ml n-Hexan (gereinigt wie oben) bei 20°C gelöst und diese TNZ-Lösung ehest unter fortwährendem Rühren zur Al₂O₃-Suspension während 50 min zugetropft, wobei nach Zugabe von wenigen ml TNZ-Lösung eine deutliche Viskositätsverminderung der Suspension eintrat. Nach Zugabe der TNZ-Lösung wurde die Drehzahl auf ca. 120 U/min verringert und weitere 12,5 h unter Lichtschutz gerührt. Zur Beschleunigung der Filtration wurde der erhaltene Katalysatorfeststoff 1 h absitzen gelassen und schließlich die Lösung mittels einer Druckfiltration über eine Glasfritte abgetrennt (Dauer 3 h). Anschließend wurde der Katalysatorfeststoff durch Anlegen eines Vakuum von unter 1.10⁻² mbar (Öldiffusionspumpe mit zwei zwischengeschalteten, flüssigstickstoffgekühlten Kühlfallen) unter Rühren bis zur Gewichtskonstanz von 292 g getrocknet (Dauer ca. 5 h). Alle Operationen wurden unter Reinststickstoff durchgeführt. Der erhaltene TNZ/Al₂O₃-Katalysator zeigte eine beige bis hellbraune Färbung und war ein frei fließendes Pulver, das eine Tendenz zur Bildung von kleinen Kugeln mit ca. 1 mm Durchmesser aufwies. Der Zr-Gehalt betrug 1,66 Gew.%.

### Beispiel 2: Katalysator B

Die Herstellung des Katalysators wurde analog zu Beispiel 1, jedoch entsprechend den in Tabelle 1 angeführten Parametern durchgeführt, mit der Ausnahme, daß das Tetraneophylzirkon (TNZ) ein zweites Mal aus n-Hexan umkristallisiert wurde (Schmelzpunkt 68,2°C, Zr-Gehalt 1,69 Gew.%).

### Beispiele 3 - 6: Katalysator C - F

Die Herstellung der Katalysatoren wurde analog zu Beispiel 1, jedoch entsprechend den in Tabelle 1 angeführten Parametern durchgeführt.

### Beispiel V7: Vergleichskatalysator G

Die Herstellung des Katalysators erfolgte analog zu Beispiel 2 entsprechend den Parametern aus Tabelle 1, jedoch ohne Abtrennung des Reaktionsmediums.

### Beispiel 8: Katalysator H

30,79 g des gemäß Beispiel 2 erhaltenen Katalysators wurden in einem 250 ml-3-Hals-Schutzgaskolben mit Thermometer und Manometer mit 1,2 bara Wasserstoff beaufschlagt und bei 30°C während 105 min mit 100 U/min gerührt. Nach Druckabfall auf 0,2 bara wurde abermals mit Wasserstoff auf 1,2 bara aufgedrückt und der Kolben im Luftbad auf 47 °C erwärmt. Nach 3 h war der Druck im Schutzgaskolben auf 0,6 bara abgefallen. Der Schutzgaskolben wurde mittels Ölvakuumpumpe über zwei flüssigstickstoffgekühlte Kühlfallen zur Abtrennung von Reaktionsprodukten evakuiert (unter 1.10⁻² mbar). Dabei wurden 0,57 g eines Gemisches von hauptsächlich Alkylcyclohexanen abgetrennt.
Der erhaltene partiell hydrierte TNT/Al₂O₃-Katalysator lag in Form eines frei fließenden beigen bis hellbraunen Pulvers mit einem Zr-Gehalt von 1,72 Gew.% vor.

### Beispiel 9: Katalysator I

11,2 g des gemäß Beispiel 8 hergestellten Katalysators wurden in einem 250 ml-3-Hals-Schutzgaskolben mit Thermometer und Manometer mit 1,2 bara Wasserstoff beaufschlagt. Der Kolben wurde in einem auf 80°C erhitzten Wasserbad 94 min erwärmt, wobei der Katalysator mit 100 U/min gerührt wurde. Die Gastemperatur im Inneren stieg dabei auf 44°C, der Druck sank auf 1,08 bara. Anschließend wurde der Kolben auf Raumtemperatur abgekühlt und wie in Beispiel 8 evakuiert. Die Gewichtsabnahme bei der Hydrierung (94 min) betrug unter 0,1 g. Der erhaltene TNZ/Al₂O₃-Katalysator war zu über 90 % hydriert.

### B) Polymerisation unter Verwendung der Katalvsatoren A - I

### Beispiel 10:

Ein bei 160°C und 0,1 mbar ausgeheizter 20I-Doppelmantelreaktor mit wandgängigem, oberflächenpoliertem Rührer, Thermostatmantel, Temperatur-, Drehzahl- und Drehmomentmessung wurde nach drei Propen/Vakuumspülzyklen mit 7,15 kg Propen bei 25°C befüllt. Nach Hochfahren des Rührwerks auf 400 U/min wurden 11,24 g des gemäß Beispiel 1 hergestellten Katalysators A mit 300 ml Flüssigpropen (ca. 20°C) eingespült und die Drehzahl nach 2 min auf 260 U/min reduziert. Anschließend wurde innerhalb von ca. 10 min die Propentemperatur auf 60°C erhöht und diese Temperatur ab Zugabe des Katalysators 67 min gehalten. Anschließend wurde die Rührerdrehzahl auf 200 U/min gesenkt und 4000 g auf ca. 40 - 50°C vorgewärmtes Aceton mittels Stickstoffüberdruck innerhalb von 3 min in den Reaktor eingebracht. Nach Erhöhung der Rührerdrehzahl auf 400U/min für ca. 2 min und anschließendes Senken auf 100 U/min wurde innerhalb von 20 min das nicht verbrauchte Propen abgeflasht. Der verbleibende ELPP (elastomeres Polypropylen)-Acetonslurry war rührbar und konnte über den 1-zölligen Bodenauslaß des Reaktors abgelassen werden. Zur Stabilisierung des ELPP wurde dem Acetonslurry eine entsprechende Menge an Stabilisatormischung von IONOL^{R} (Fa. Shell) und IRGAFOS^{R} PEPQ (Fa. Ciba-Geigy) im Gewichtsverhältnis 2 : 1 zugegeben, die im getrockeneten Polymer ca. 0,3 Gew.% entsprach.
Reaktorwand und Rührer waren weitgehend polymerfrei. Nach Filtration des ELPP und Trocknen im Stickstoffstrom bei 50°C erhielt man 1,39 kg eines pulvrig-krümeligen, nicht klebrigen ELPP mit einem Schmelzpunkt (Tm) von 147,1°C (gemessen mit einem Du Pont Differential Scanning Calorimeter 910/20 (Thermal Analyst 2100)), entsprechend einem bilanzierten Zr-Gehalt von 135 ppm und einem Al₂O₃-Gehalt von 0,74 Gew.%.

### Beispiel 11:

Es wurde analog zu Beispiel 10 entsprechend den in Tabelle 2 vorgegebenen Parametern vorgegangen mit dem Unterschied, daß bei der Befüllung des Reaktors mit 6,6 kg Propen bei 29°C zusätzlich 8,25 l H₂ dosiert wurden.
Der resultierende ELPP-Acetonslurry war rührbar und über den Bodenablaß des Reaktors ablaßbar. Nach Filtration und Vakuumtrocknung erhielt man 1,07 kg eines rieselfähigen ELPP-Pulvers mit einer inherenten Viskosität von 5,42 dl/g, gemessen in Anlehnung an DIN ISO 1628 bei einer Konzentration von 1 g/l, sowie einem Schmelzpunkt von 149,1 °C, gemessen mit einem Du Pont Differential Scanning Calorimeter 910/20 (Thermal Analyst 2100).

### Beispiel 12:

Es wurde analog zu Beispiel 10 entsprechend den in Tabelle 2 vorgegebenen Parametern vorgegangen, mit dem Unterschied, daß die Polymerisationsdauer 120 statt 67 min betrug.
Der resultierende ELPP-Acetonslurry war rührbar und über den Bodenablaß des Reaktors ablaßbar. Nach Filtration und Vakuumtrocknung erhielt man 1,88 kg eines rieselfähigen ELPP-Pulvers mit einem Schmelzpunkt von 148,1°C, gemessen mit einem Du Pont Differential Scanning Calorimeter 910/20 (Thermal Analyst 2100). Der bilanzierte Zirkongehalt betrug 89 ppm, der Al₂O₃-Gehalt 0,49 %.

### Beispiel 13:

Nach Durchführung der 120minütigen Polymerisation analog zu Beispiel 11 und den in Tabelle 2 angeführten Polymerisationsparametern wurden anstelle von Aceton 1700 g auf ca. 40 - 50°C vorgewärmtes Methanol mit 40 bar Stickstoffvordruck innerhalb von 2 min bei einer Rührerdrehzahl von 200 U/min in den Reaktor eindosiert. Anschließend wurde der Reaktormantel auf 60°C thermostatisiert und innerhalb 15 min das nicht verbrauchte Propylen abgeflasht. Der verbleibende Methanolslurry war rührbar und konnte über das 1-Zoll-Kugelventil des Reaktorbodens abgelassen werden. Die Reaktorwand, der Rührer und die Thermoelementhülsen waren weitgehend polymerfrei. Nach Zugabe einer ca. 0,3 Gew.% (bezogen auf das getrocknete Polymer) entsprechenden Menge an Stabilisatormischung von Ionol^{R} (Fa. Shell) und Irgafos^{R} PEPQ (Fa. Ciba-Geigy) im Gewichtsverhältnis von 2 : 1 zum Slurry und Trocknung im Luftstrom und anschießend im Vakuum bei 50°C wurden 1,93 kg eines pulvrig-krümeligen, nicht klebrigen und für die Dosierung in Verarbeitungsmaschinen geeigneten ELPP mit einer inherenten Viskosität von 10,1 dl/g, gemessen in Anlehnung an DIN ISO 1628 bei einer Konzentration von 1 g/l, und einem Schmelzpunkt von 147°C, gemessen mit einem Du Pont Differential Scanning Calorimeter 910/20 (Thermal Analyst 2100), erhalten.

### Beispiele 14 und 15:

Es wurde analog zu Beispiel 12 entsprechend den in Tabelle 2 angegebenen Parametern verfahren mit dem Unterschied, daß die Polymerisationsdauer verlängert wurde. Die bilanzierten Zirkon- und Al₂O₃-Gehalte zeigen, daß die Katalysatoraktivität bei einer Polymerisationstemperatur von 60°C auch über mehr als 4 h erhalten blieb.

### Beispiel 16:

Es wurde analog zu Beispiel 10 entspreched den inTabelle 2 angegebenen Parametern verfahren mit dem Unterschied, daß die Polymerisationstemperatur auf 70°C erhöht wurde.

Der erhaltene Acetonslurry war fließfähig und konnte über das Bodenventil des Reaktors abgelassen werden. Nach Stabilisierung mit 0,3 Gew.% Ionol/Irgafos PEPQ (w/w = 2:1) bezogen auf das Polymer und Trocknung im Luftstrom und Vakuum bei 50°C wurde ein förder- und dosierbares, krümelig-pulvriges elastomeres Polypropylen erhalten. Der bilanzierte Zr- bzw. Al₂O₃-Gehalt von 111 ppm bzw. 0,61 Gew.% entspricht einer Aktivitätszunahme von ca. 34% bei Steigerung der Polymerisationstemperatur von 60 auf 70°C.

### Beispiel 17:

Es wurde analog zu Beispiel 13 verfahren entsprechend den in Tabelle 2 angegebenen Parametern mit dem Unterschied, daß die Polymerisationstemperatur 70 °C betrug und 2800 g Aceton anstelle von Methanol zudosiert wurden. Das nach Abtrennung des Acetons erhaltene krümeligpulvrige elastomere Polypropylen mit einem bilanzierten Zr- bzw. Al₂O₃-Gehalt von 69 ppm bzw. 0,38 Gew.% wies eine inherente Viskosität von 10,35 dl/g, gemessen in Anlehnung an DIN ISO 1628 bei einer Konzentration von 1 g/l und eine inherente Viskosität von 10,22 dl/g, gemessen in Anlehnung an DIN ISO 1628 bei einer Konzentration von 0,55 g/l auf.

### Beispiel 18:

Es wurde analog zu Beispiel 17 entsprechend den in Tabelle 2 angegebenen Parametern verfahren, wobei ein Katalysator B gemäß Beispiel 2 (TNZ zweimal umkristallisiert) eingesetzt wurde und die Polymerisationsdauer 4 h betrug. Der nach Fällung mit Aceton erhaltene ELPP-Slurry war fließfähig und durch das Bodenventil ablaßbar. Nach Zugabe von 0,3 % Stabilisator bezogen auf das ELPP (Ionol/Irgafos PEPQ (w/w= = 2:1) und Trocknung im Luftstrom und anschließend im Vakuum bei 50°C wurde ein krümelig-pulvriges, elastomeres Polypropylen mit einem bilanzierten Zr-bzw. Al₂O₃-Gehalt von 41 ppm bzw. 0,22 Gew.% und einer inherenten Viskosität von 9,6 dl/g, gemessen in Anlehnung an DIN ISO 1628 bei einer Konzentration von 1 g/l erhalten.

### Vergleichsbeispiel V19:

Es wurde analog zu Beispiel 18 entsprechend den in Tabelle 2 gegebenen Parametern verfahren, mit dem Unterschied, daß der im Reaktionsmedium n-Hexan hergestellte, nicht erfindungsgemäße Katalysator G gemäß Beispiel V7 ohne Abtrennung des Reaktionsmediums und weiterer Reaktionsprodukte eingesetzt wurde. Der nach Fällung mit Aceton erhaltene ELPP-Slurry war fließfähig und durch das Bodenventil ablaßbar. Nach Zugabe von ca. 0,3 Gew.% Stabilisatormischung Ionol/Irgafos PEPQ (w/w = 2:1) bezogen auf das trockene Polymer und Trocknung im Luftstrom und anschließend im Vakuum bei 50°C wurde ein krümelig-pulvriges elastomeres Polypropylen mit einem bilanzierten Zr-bzw. Al₂O₃-Gehalt von 60 ppm bzw. 0,33 % und einer inherenten Viskosität von 9,8 dl/g, gemessen in Anlehnung an DIN ISO 1628 bei einer Konzentration von 1g/l erhalten. Aus dem Beispiel wird ersichtlich, daß bei Verwendung des nicht erfindungsgemäßen Katalysators weit höhere Katalysatorreste im Polymer verbleiben.

### Beispiel 20:

Es wurde analog zu Beispiel 17 entsprechend den in Tabelle 2 angegebenen Parametern verfahren mit dem Unterschied, daß die Polymerisationstemperatur 80°C betrug.
Das nach Abtrennung des Acetons erhaltene elastomere Polypropylen wies einen bilanzierten Zr- bzw. Al₂O₃-Gehalt von 54 ppm bzw. 0,30 Gew.% auf, entsprechend einer Aktivitätszunahme von 28 % bei Steigerung der Polymerisationstemperatur von 70 auf 80 °C.

### Beispiel 21:

Es wurde analog zu Beispiel 17 entsprechend den in Tabelle 2 angegebenen Parametern verfahren, mit dem Unterschied, daß die Polymerisationstemperatur 80°C und die Polymerisationsdauer 4 h betrug. Das nach Abtrennung des Acetons erhaltene ELPP wies einen bilanzierten Zr- bzw. Al₂O₃-Gehalt von 35 ppm bzw. 0,19 Gew.% auf.

### Beispiel 22:

Es wurde analog zu Beispiel 12 entsprechend den in Tabelle 2 angegebneen Parametern verfahren, mit dem Unterschied, daß nach einer Polymerisationsdauer von 15 min nach Dosierung des Katalysators der Reaktorgesamtdruck von 22,7 bar durch Dosieren von Ethylen auf 23,7 bar erhöht und bei diesem Druck durch Dosieren von Ethylen bis zur Fällung mit Aceton nach 60 min gehalten wurde. Die gesamte dosierte Ethylenmenge betrug ca. 270 g.
Der erhaltene Acetonslurry des elastomeren Copolymers war rührbar und fließfähig und über das Bodenventil ablaßbar. Der Zr- bzw. Al₂O₃-Gehalt des im Luftstrom und anschließend im Vakuum bei 50 °C getrockneten elastomeren Copolymers betrug 58 ppm bzw. 0,33 Gew. %.

### Beispiel 23:

Es wurde analog zu Beispiel 12 entsprechend den in Tabelle 2 angegebenen Parametern verfahren, mit dem Unterschied, daß ab einer Polymerisationsdauer von 15 min nach Katalysatordosierung Ethylen mit konstantem Gasfluß bis zur Fällung mit Aceton eindosiert wurde. Die dosierte Ethylenmenge betrug ca. 610 g.
Der erhaltene Acetonslurry des elastomeren Copolymeren war rührbar und fließfähig und ließ sich durch das Bodenventil des Reaktors ablassen. Der Zr- bzw. Al₂O₃-Gehalt des im Luftstrom und anschließend im Vakuum bei 50°C getrockneten elastomeren Copolymers betrug 42 ppm bzw. 0,23 Gew.%.

### Beispiel 24:

Es wurde analog zu Beispiel 12 entsprechend den in Tabelle 2 angegebenen Parametern verfahren, mit dem Unterschied, daß der gemäß Beispiel 8 hergestellte hydrierte Katalysator H eingesetzt wurde.
Der erhaltene Acetonslurry des elastomeren Polypropylens war rührbar und fließfähig und über das Bodenventil ablaßbar. Der Zr- bzw. Al₂O₃-Gehalt des im Luftstrom bzw. anschließend im Vakuum bei 50°C getrockneten, feinpulvrigen, förderbaren elastomeren Polypropylens betrug 89 ppm bzw. 0,49 Gew.%.

### Beispiel 25:

Es wurde analog zu Beispiel 18 entsprechend den in Tabelle 2 angegebenen Parametern verfahren mit dem Unterschied, daß der gemäß Beispiel 9 hergestellte hydrierte Katalysator I eingesetzt wurde.
Der erhaltene Acetonslurry des elastomeren Polypropylens war rührbar und fließfähig und über das Bodenventil ablaßbar. Der bilanzierte Zr- bzw. Al₂O₃-Gehalt des im Luftstrom und anschließend im Vakuum bei 50°C getrockneten, feinpulvrigen und förderbaren elastomeren Polypropylens betrug 50 ppm bzw. 0,27 Gew.%.

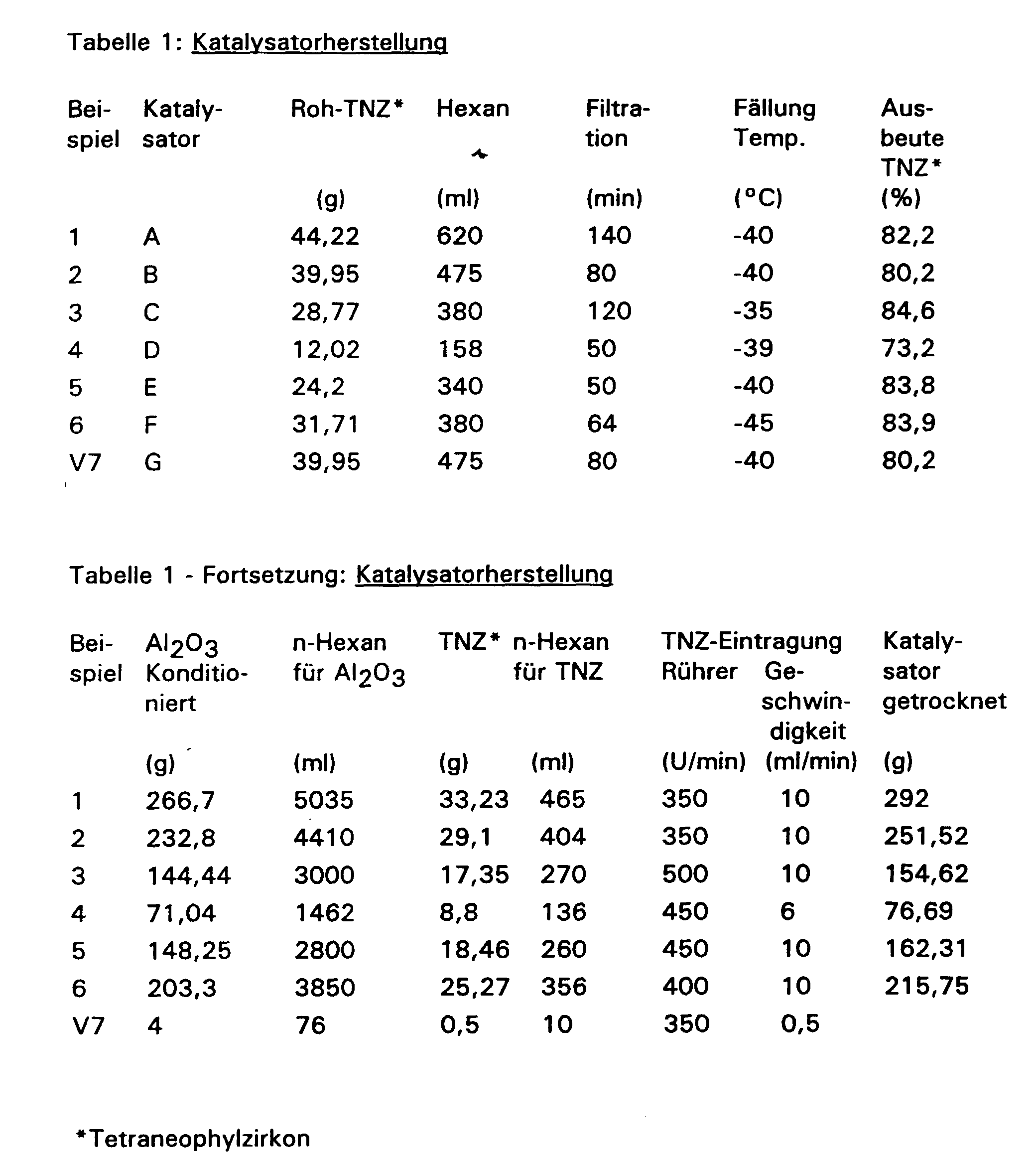

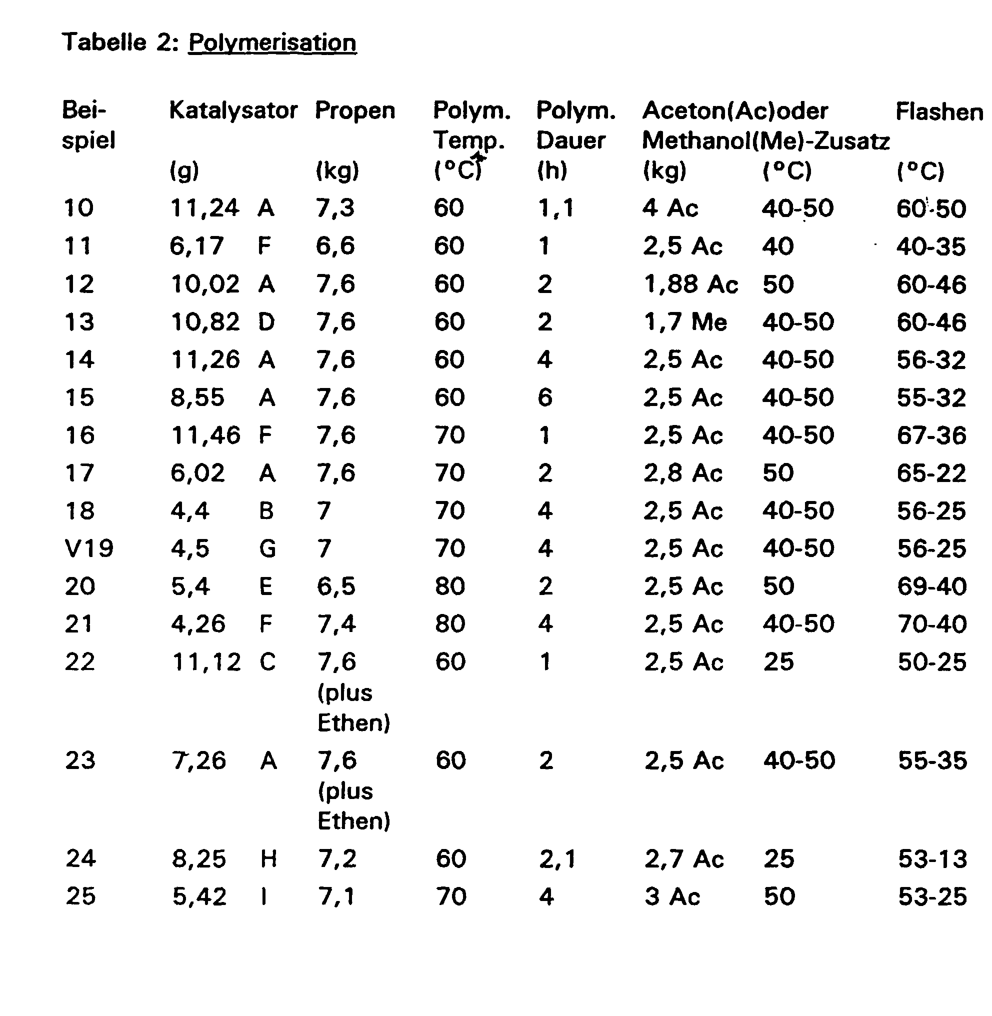

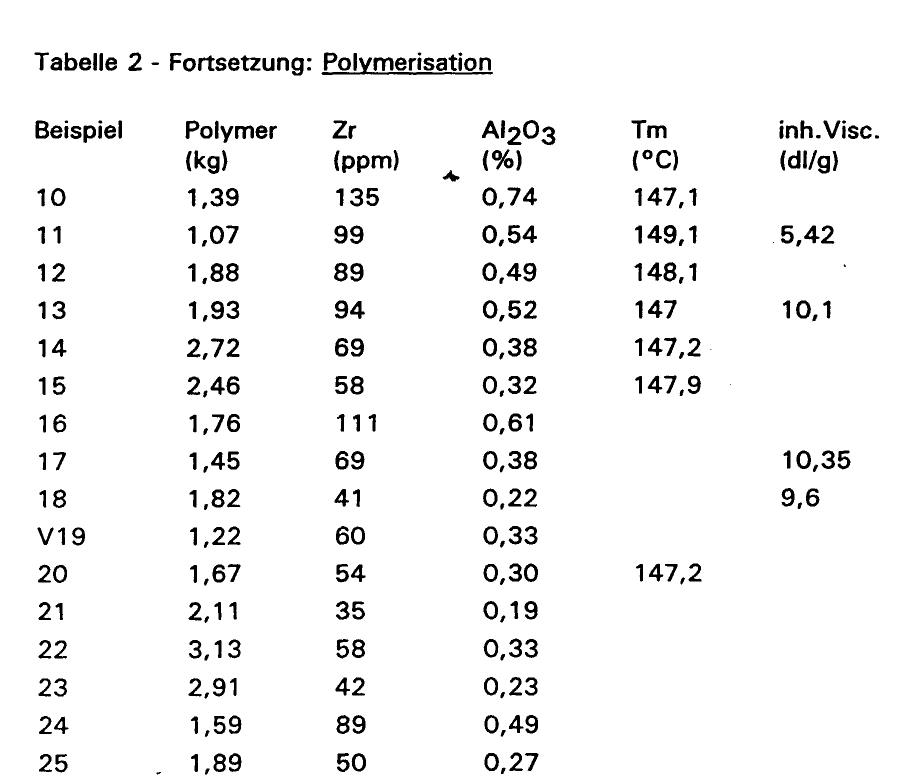

## Patentansprüche

1. Verfahren zur Herstellung von hochaktiven Katalysatoren für die Olefinpolymerisation, bei dem im wesentlichen
a) metallorganische Verbindungen der Formel (RCH₂)₄M, in der R ein Aryl-, Aralkyl, tertiärer Alkyl- oder Trialkylsilylrest, ist, wobei die RCH₂-Gruppe keinen an ein Atom in beta-Stellung zu M gebundenen H besitzt, und M für Ti, Zr oder Hf steht, mit
b) Metalloxiden aus der Gruppe IIa, IIIa, IVa, IVb mit einer teilweise hydroxylierten Oberfläche oder deren Gemischen
in einem Kohlenwasserstoff als Reaktionsmedium umgesetzt werden, dadurch gekennzeichnet, daß die bei der Umsetzung entstehenden Nebenprodukte durch Auswaschen mit flüssigen, inerten Kohlenwasserstoffen, oder durch mechanische Trennverfahren, oder durch Abdampfen, bevorzugt im Vakuum, oder durch eine Kombination dieser Maßnahmen, ganz oder teilweise aus dem erhaltenen Katalysator entfernt werden.

2. Verfahren zur Herstellung von Katalysatoren gemäß Anspruch 1, dadurch gekennzeichnet, daß die metallorganische Verbindung der Formel (RCH₂)₄M vor der Umsetzung mit dem Metalloxid aus einem flüssigen Kohlenwasserstoff umkristallisiert wird.

3. Verfahren zur Herstellung von Polyolefinen durch katalytische Homo- oder Copolymerisation von Olefinen, dadurch gekennzeichnet, daß bei der Polymerisation Katalysatoren herstellbar gemäß einem der Ansprüche 1 oder 2 verwendet werden.

4. Verfahren gemäß Anspruch 3, dadurch gekennzeichnet, daß als Olefin Propylen, gegebenenfalls mit Ethylen als Comonomer, eingesetzt wird.

## Claims

1. Process for the preparation of highly active catalysts for olefin polymerization, in which essentially
a) organometallic compounds of the formula (RCH₂)₄M, in which R is an aryl, aralkyl, tertiary alkyl or trialkylsilyl radical, wherein the RCH₂ group has no H bonded to an atom in the beta-position relative to M, and M represents Ti, Zr or Hf, are reacted with
b) metal oxides from group IIa, IIIa, IVa or IVb having a partly hydroxylated surface or mixtures thereof,
in a hydrocarbon as the reaction medium, characterized in that the by-products formed in the reaction are removed completely or partly from the resulting catalyst by washing them out, using for example a liquid, inert hydrocarbon such as that employed as the reaction medium, or by mechanical separation techniques, for example by filtration, centrifugation or decanting together with the reaction medium, or by evaporation, preferably under vacuum, or by a combination of these measures.

2. Process for the preparation of catalysts according to Claim 1, characterized in that the organometallic compound of the formula (RCH₂)₄M is recrystallized from a liquid hydrocarbon before the reaction with the metal oxide.

3. Process for the preparation of polyolefins by catalytic homo- or copolymerization of olefins, characterized in that catalysts which can be prepared according to one of Claims 1 or 2 are used in the polymerization.

4. Process according to Claim 3, characterized in that propylene, if appropriate with ethylene as a comonomer, is employed as the olefin.

## Revendications

1. Procédé de préparation de catalyseurs fortement actifs pour la polymérisation des oléfines, dans lequel on fait réagir essentiellement :
a) des composés organométalliques répondant à la formule (R-CH₂)₄M, où R est un reste aryle, aralkyle, alkyle tertiaire ou trialkylsilyle, le groupement RCH₂ ne possédant pas d'atome d'hydrogène lié à un atome en position bêta par rapport à M, et M signifiant Ti, Zr ou Hf, avec
b) des oxydes de métaux des groupes IIa, IIIa, IVa et IVb avec une surface partiellement hydroxylée, ou des mélanges de ceux-ci,
dans un hydrocarbure comme milieu de réaction,
caractérisé en ce qu'on élimine, du catalyseur obtenu, les produits secondaires formés pendant la réaction, par lavage avec des hydrocarbures inertes liquides ou au moyen de procédés de séparation mécanique ou par évaporation, de préférence sous vide, ou grâce à une combinaison de ces mesures.

2. Procédé de préparation de catalyseurs selon la revendication 1, caractérisé en ce qu'on fait recristalliser le composé organométallique répondant à la formule (RCH₂)₄M dans un hydrocarbure liquide avant la réaction avec l'oxyde métallique.

3. Procédé de préparation de polyoléfines par homopolymérisation ou copolymérisation catalytique d'oléfines, caractérisé en ce qu'on utilise des catalyseurs qu'on peut préparer selon la revendication 1 ou 2 pour la polymérisation.

4. Procédé selon la revendication 3, caractérisé en ce qu'on utilise du propylène comme oléfine, éventuellement avec de l'éthylène comme comonomère.
